# EUROPÄISCHE PATENTANMELDUNG

(11) **EP 3 670 444 A1**
(43) Veröffentlichungstag der Anmeldung: **24.06.2020**
(21) Anmeldenummer: 18213263.9
(22) Anmeldetag: 18.12.2018
(51) Int. Cl.: C01B 7/04, B01J 21/06, B01J 35/00

(54) **PHOTOKATALYTISCHE OXIDATION VON SALZSÄURE MIT SAUERSTOFF**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Es wird ein neues Verfahren zum Recycling wässriger Chlorwasserstofflösungen zur Herstellung von Chlor durch photokatalytische Oxidation von gelöstem Chlorwasserstoff mit Sauerstoff als Oxidationsmittel beschrieben.

## Beschreibung

Die Erfindung betrifft ein Verfahren zum Recycling wässriger Chlorwasserstofflösungen zur Herstellung von Chlor durch photokatalytische Oxidation von gelöstem Chlorwasserstoff mit Sauerstoff als Oxidationsmittel.

Bei der Herstellung vieler organischer Verbindungen sowie bei der Herstellung von Rohstoffen für die Produktion von Polymeren wird in der Produktionskette Chlor (Cl₂) als Reaktionspartner eingesetzt. Bei der Umwandlung der chlorhaltigen Zwischenprodukte in chlorfreie Endprodukte entsteht häufig Chlorwasserstoff (HCl) als Nebenprodukt. Ein Beispiel für diese Reaktionskette ist die Herstellung von Polyurethanen über Phosgen als Zwischenprodukt. Die weitere Nutzung des anfallenden Chlorwasserstoffs kann z.B. durch Vermarktung der wässrigen Lösung (Salzsäure) oder durch Verwendung des Chlorwasserstoffs bei Synthesen anderer chemischer Produkte erfolgen. Die anfallenden Mengen an Chlorwasserstoff können jedoch nicht immer vollständig am Standort seines Anfalls genutzt werden. Ein Transport von Chlorwasserstoff oder Salzsäure über weite Wege ist unwirtschaftlich. Die Entsorgung des Chlorwasserstoffs durch Neutralisation mit Lauge ist technisch möglich, aus wirtschaftlicher und ökologischer Sicht jedoch ebenfalls unerwünscht. Aus ökonomischen und ökologischen Gründen ist daher eine chemische Produktion mit einem geschlossenen Chlorkreislauf wünschenswert. Dieser Kreislauf sollte das Recycling von Chlorwasserstoff zu Chlor beinhalten. Wegen der essentiellen Rolle der Chlorchemie in der chemischen Industrie und wegen der großen anfallenden Mengen an Chlorwasserstoff in der Größenordnung von ≥ 10⁹ kg/a allein in Deutschland besitzen Technologien zum HCl-Recycling zur Wiederherstellung von Chlor eine enorme wirtschaftliche Bedeutung.

HCl-Recyclingverfahren sind Stand der Technik (vgl. Ullmann Enzyklopädie der technischen Chemie, Weinheim, 4. Auflage 1975, Bd. 9, S. 357 ff. oder Winnacker-Küchler: Chemische Technik, Prozesse und Produkte, Wiley-VCH Verlag, 5. Auflage 2005, Bd. 3, S. 512 ff.): Dazu zählen insbesondere die Elektrolyse von Salzsäure sowie die Oxidation von Chlorwasserstoff. Das von Deacon 1868 entwickelte Verfahren der katalytischen Chlorwasserstoffoxidation mit Sauerstoff in einer exothermen Gleichgewichtsreaktion stand am Anfang der technischen Chlorchemie:

4HCl + O₂ --> 2Cl₂ + 2H₂O

Durch die Chloralkalielektrolyse wurde das Deacon-Verfahren jedoch stark in den Hintergrund gedrängt. Nahezu die gesamte Produktion von Chlor erfolgte durch Elektrolyse wässriger Kochsalzlösungen [Ullmann Encyclopedia of industrial chemistry, seventh release, 2006]. Die Attraktivität des Deacon-Verfahrens nimmt jedoch in jüngster Zeit wieder zu, da der weltweite Chlorbedarf stärker wächst als die Nachfrage nach Natronlauge. Dieser Entwicklung kommt das Verfahren zur Herstellung von Chlor durch Oxidation von Chlorwasserstoff entgegen, das von der Natronlaugenherstellung entkoppelt ist. Darüber hinaus fällt Chlorwasserstoff in großen Mengen beispielsweise bei Phosgenierungsreaktionen, etwa bei der Isocyanat-Herstellung, als Koppelprodukt an.

Die Deacon-Reaktion kann entweder bei hohen Temperaturen (>700°C) rein thermisch oder in Gegenwart von Katalysatoren bei einer Temperatur von 300 bis 450 °C durchgeführt werden. Die rein thermische Deacon-Reaktion wird für ein HCl-Recycling im technischen Maßstab praktisch nicht genutzt.

Die ersten Katalysatoren für die HCl-Gasphasenoxidation enthielten Kupfer in der oxidischen Form als Aktivkomponente und waren bereits durch Deacon in 1868 beschrieben worden. Diese Katalysatoren deaktivierten rasch, weil die Aktivkomponente sich unter den hohen Prozesstemperaturen verflüchtigte.

Auch die HCl-Gasphasenoxidation mittels Chromoxid-basierten Katalysatoren ist bekannt. Jedoch neigen Chrom-basierte Katalysatoren dazu unter oxidierenden Bedingungen Chrom(VI)Oxide auszubilden, die sehr giftig sind und technisch aufwendig von der Umgebung fern gehalten werden müssen. Darüber hinaus wird in anderen Veröffentlichungen eine kurze Laufzeit solcher Verfahren unterstellt (WO 2009/035234 A, Seite 4, Zeile 10).

Ruthenium-basierte Katalysatoren für die HCl-Gasphasenoxidation wurden zum ersten Mal 1965 beschrieben, jedoch war die Aktivität dieser RaCl₃/SiO₂-Katalysatoren recht gering (siehe: DE 1567788 A1). Weitere Katalysatoren mit den Aktivkomponenten Rutheniumdioxid, Mischoxiden des Rutheniums oder Rutheniumchlorid in Kombination mit verschiedenen Trägeroxiden, wie Titandioxid oder Zinndioxid wurden auch schon beschrieben (siehe z.B.: EP 743277A1, US-A-5908607, EP 2026905 A1 und EP 2027062 A2). Die Verwendung von Titandioxid als Katalysator ist nicht beschrieben.

Die Deacon-Reaktion verläuft exotherm (Standardreaktionsenthalpie -57 kJ/mol Chlor) und reversibel. Bei der für technische Prozesse erforderlichen Reaktionstemperatur von ≥ 300°C liegt das Reaktionsgleichgewicht nicht mehr vollständig auf der Produktseite. Aus den bekannten thermodynamischen Daten der Reaktion folgt, dass z.B. bei 350 °C Reaktionstemperatur, 0,1 MPa Gasdruck und stöchiometrischen Eduktverhältnissen (HCl : O₂ = 4 : 1 Mole/Mol) ein maximaler HCl-Umsetzungsgrad von rund 85 % erreichbar ist. Ein höherer HCl-Umsatz ist nur durch einen Sauerstoffüberschuss erreichbar, jedoch um den Preis höherer Aufwendungen für die Aufbereitung der Reaktionsprodukte. Könnte man die Reaktionstemperatur auf 150 °C absenken, wäre ein Gleichgewichtsumsatz von bis zu 99 % möglich.

Um die Reaktionstemperatur bis in den thermodynamisch günstigen Bereich (< 300°C) absenken zu können, wurden sogenannte nichtthermische Anregungsquellen untersucht. Derartige Verfahrensprinzipien sind beispielsweise in Stiller (W. Stiller: Nichtthermisch aktivierte Chemie. Birkheuser Verlag, Basel, Boston, 1987, S. 33-34, S. 45-49, S122-124, S. 138-145.) beschrieben. HCl-Oxidationsverfahren mit nichtthermischer Aktivierung sind in den Schriften JP 5 907 3405, RU A 2253 607, DD 88 309, SUA 180 1943, Cooper et al. (W. W. Cooper, H. S. Mickley, R. F. Baddour: Oxidation of hydrogen chloride in a microwave discharge. Ind. Eng. Chern. Fundam. 7(3), 400-409 (1968).), van Drumpt (J. D. van Drumpt: Oxidation of Hydrogen Chloride with Molecular Oxygen in a Silent Electrical Discharge. Ind. Eng. Chern. Fundam. 22(4), 594-595 (1972)) und DE 10 2006 022 761 A1 beschrieben. Sie basieren überwiegend auf der photochemischen Aktivierung eines der beiden Reaktionspartner, HCl oder O₂. JP 59-73 405A beschreibt die Photooxidation von gasförmigem Chlorwasserstoff, wobei zur Anregung der Reaktanden gepulste Laserstrahlung oder eine Hochdruck-Quecksilberdampflampe oder auch eine Kombination der beiden genannten Photonenquellen eingesetzt wird.

In RU 2 253 607 wird ebenfalls ein photochemisches Verfahren zur Chlorherstellung beschrieben, bei dem ein HCl-Luft-Gemisch durch einen Rohrreaktor strömt und die Aktivierung der Reaktanden in einer Reaktionszone durch einen Quecksilberdampfstrahler erfolgt.

EP1914199 beschreibt ein Verfahren zur Chlorherstellung aus einem gasförmigen Chlorwasserstoff und Sauerstoff enthaltendem Gemisch unter Einwirkung von ultravioletter Strahlung, bei einer Wellenlänge im Bereich von 165 nm bis 270 nm bei einer Dichte der ultravioletten Strahlung von (10-40) *10⁻⁴ W/cm³ und einem Druck von nicht mehr als 0,1 MPa. Die Oxidation des Chlorwasserstoffs erfolgt durch den aktivierten Sauerstoff unter Bildung des Zielprodukts. Es werden fast quantitative Umsetzungsgrade behauptet, ohne dass es zu einer Erwärmung des Produktgemisches kommt. Es wird nicht genannt, welcher Energieaufwand für die Anregungsquellen (UV oder Elektronen) zur Erzielung der genannten Umsetzungsgrade notwendig ist. Weiterhin finden sich keine Angaben zur Verweilzeit der Reaktanden oder der Größe der eingesetzten Reaktionsapparate. Der Hauptreaktionsweg erfolgt gemäß der Anmeldung über angeregte (einzelne) Sauerstoffatome, Ozon wird nur als Nebenprodukt der Sauerstoff-Anregung genannt.

DD 88 309 A beschreibt eine katalysierte thermische HCl-Oxidation bei 150° - 250°C, die zusätzlich durch den Einsatz von nicht näher definierter UV-Strahlung unterstützt wird.

In der Schrift WO 2010 020 345 A1 wird ein Verfahren zur heterogen katalysierten Oxidation von Chlorwasserstoff mittels Sauerstoff enthaltender Gase beschrieben, dadurch gekennzeichnet, dass ein Gasgemisch bestehend mindestens aus Chlorwasserstoff und Sauerstoff einen geeigneten festen Katalysator durchströmt und gleichzeitig der Einwirkung eines nichtthermischen Plasmas ausgesetzt wird. Das Verfahren ist energetisch ineffektiv.

WO2017194537A1 beschreibt ein Verfahren zur heterogen photokatalysierten Oxidation von Chlorwasserstoff mittels einer UV-Strahlung, dadurch gekennzeichnet, dass ein Gasgemisch wenigstens aus Chlorwasserstoff, Sauerstoff und ggf. weiteren Nebenbestandteilen erzeugt und über einen festen Photo-Katalysator geleitet wird und die Reaktion auf der Oberfläche des Katalysators durch Einwirkung von UV-Strahlung in einem selektiven Energiebereich gestartet wird. Bezüglich der Eigenschaften der Katalysatoren offenbart WO2017194537A1, dass unter Bestrahlung bzw. Verwendung eines Ru/TiO₂ Katalysators signifikante Ausbeuten an Chlor erhalten werden können. Die Verwendung von purem TiO₂ hingegen führte zwar ebenfalls zur Bildung von Chlor, jedoch in wesentlich geringeren Ausbeuten.

Durch die notwendigen Reaktionsbedingungen (Temperatur) kann das thermische Deacon Verfahren grundsätzlich nicht in der Flüssigphase verwendet werden. Zur Gewinnung von Chlor aus Salzsäure wird daher technisch bislang immer eine Salzsäure-Elektrolyse verwendet.

Im Hinblick auf die Wirtschaftlichkeit und sonstige technische Anforderungen kann eine HCl-Elektrolyse jedoch nicht mit beliebigen Konzentrationen durchgeführt werden. Um die notwendigen Konzentrationen zu erreichen, müssen daher verdünnte Lösungen oftmals durch Wasserentzug oder Versetzen mit HCl-Gas aufwendig, typischerweise auf eine Konzentration von deutlich mehr als 12 Gew.-%, aufkonzentriert werden. Steht kein gasförmiges HCl zur Verfügung bleibt lediglich ein Eindampfen der Säure als Möglichkeit, was jedoch oft mit hohem energetischem Aufwand und demzufolge mit wirtschaftlich hohen Kosten verbunden ist. Verdünnte Salzsäure wird daher oft durch Einsatz von Laugen neutralisiert. Die dann anfallenden Salzlösungen müssen dann unter Umständen ebenfalls aufbereitet und konzentriert werden um sie einer NaCl-Elektrolyse zuzuführen.

Die technische Aufgabe der vorliegenden Erfindung besteht darin ein Verfahren zu entwickeln, welches eine Aufbereitung einer verdünnten Salzsäure zur Herstellung von Chlor auf einfachere Art als im Stand der Technik beschrieben ermöglicht.

Die Aufgabe wird überraschenderweise erfindungsgemäß dadurch gelöst, dass man Salzsäure in einer Reaktionszone in Gegenwart von Feststoffkatalysator und Sauerstoff einer Lichtstrahlung im Bereich von 320 nm bis 800 nm aussetzt.

Gegenstand der Erfindung ist ein photokatalytisches Verfahren zur Herstellung von Chlor aus wässriger Salzsäure durch Reaktion der Salzsäure mit Sauerstoff enthaltendem Gas in Gegenwart von photoaktivem Feststoffkatalysator in einer Reaktionszone, dadurch gekennzeichnet, dass die Reaktion unter Einstrahlen von Strahlung einer Wellenlänge im Bereich von 280 nm bis 800 nm durchgeführt wird.

Überaschenderweise wurde dabei insbesondere gefunden, dass solche für eine thermische katalysierte Gasphasenreaktion (Deacon Prozess) als weitestgehend inaktiv beschriebene Katalysatoren wie insbesondere TiO₂ in der Flüssigphase erfolgreich als Photokatalysator genutzt werden konnten.

Bevorzugt weist der Katalysator mindestens ein photoaktives Material, insbesondere ein gegenüber Salzsäure und Sauerstoff beständiges photoaktives Material auf.

Als besonders geeignet haben sich Feststoffkatalysatoren erwiesen, die bevorzugt im neuen Verfahren eingesetzt werden und mindestens ein Oxid, Oxidchlorid, Mischoxid oder Mischoxidchlorid der Metalle: Titan, Cer, Zinn, Tantal gegebenenfalls als Mischoxide dieser Metalle mit Alkalimetallen oder Erdalkalimetallen, insbesondere Ca, Sr, Ba, Na und K umfassen. Besonders bevorzugt werden Feststoffkatalysatoren eingesetzt, die ausgewählt sind aus einem oder mehreren der Reihe: TiO₂, CeO₂, SnO₂, Strontiumtantalate SrₓTa_{y}O_{z}, Strontiumtitanate, insbesondere SrTiO₃, Ceroxidchlorid und Titanoxidchlorid.

Die Ausbeute kann in einer bevorzugten Ausführung durch Verwendung eines Cokatalysators weiter erhöht werden. Jedoch sind hierbei wesentlich geringere Mengen bzw. eine geringere Beladung notwendig, als es bspw. bei der thermischen Reaktion der Fall ist. Mit Hinblick auf die oftmals höheren Kosten eines solchen Cokatalysators im Vergleich zum Trägermaterial stellt dies eine Verbesserung gegenüber dem thermischen Verfahren dar, da so die Katalysatorkosten drastisch gesenkt werden können.

Eine weitere bevorzugte Ausführung des neuen Verfahrens ist daher dadurch gekennzeichnet, dass der Feststoffkatalysator zusätzlich mindestens einen weiteren Katalysator (Co-Katalysator) als zusätzliche katalytische Aktivkomponente hat, welcher mindestens eine Verbindung aus der Reihe: CuCl₂, FeCl₃, Cr₂O₃, Chromoxidchlorid, RuO₂, Rutheniumoxidchlorid und RuCl₂ umfasst und für den Fall, dass das photoaktive Material nicht CeO₂ und/oder Ceroxidchlorid ist CeO₂ und Ceroxidchlorid.

In einer bevorzugten Ausführung des neuen Verfahrens wird als Strahlung UV-Strahlung mit einem Energiebereich von 3,2 bis 4 eV, bevorzugt von 3,26 bis 3,94 eV, eingesetzt.

In einer besonders bevorzugten Ausführung des neuen Verfahrens wird die UV-Strahlung zweckmäßigerweise mittels UV-LED-Lampen erzeugt.

Der Feststoff-Katalysator weist bevorzugt mindestens ein photoaktives Material wie ein Übergangsmetall oder Übergangsmetalloxid oder ein Halbleitermaterial auf. Photoaktiv im Sinne der bevorzugten Erfindung ist ein Material das bei Bestrahlung mit Licht die Reaktionsenergie für die Umwandlung von molekularem Sauerstoff (O₂) zu einer aktiven Sauerstoffspezies bzw. die Umwandlung von Chlor- und Chlorwasserstoffspezies zu einer aktiven Chlor- und Chlorwasserstoffspezies auf der Oberfläche des Katalysators bereitstellt.

Ganz besonders bevorzugt wird als Co-Katalysator für das neue Verfahren ein oder mehrere Katalysatoren ausgewählt aus der Reihe: Rutheniumoxid, Rutheniumchlorid und Rutheniumoxidchlorid eingesetzt.

In einer ganz besonders bevorzugten Ausführung des Verfahrens weist der Feststoffkatalysator-Katalysator mindestens ein photoaktives Material auf, bestehend aus einer oder mehreren Verbindungen ausgewählt aus der Reihe: AlCuO₂, AlₓGa_{y}In_{1-x-y}N, AlₓIn₁₋ₓN, AlN, B₆O, BaTiO₃, CdS, CeO₂, Fe₂O₃, GaN, Hg₂SO₄, InₓGa₁₋ₓN, In₂O₃, KTaO₃, LiMgN, NaTaO₃, Nb₂O₅, NiO, PbHfO₃, PbTiO₃, PbZrO₃, Sb₄Cl₂O₅, Sb₂O₃, SiC, SnO₂, SrCu₂O₂, SrT₁O₃, TiO₂, WO₃, ZnO, ZnS, ZnSe, und welches sich durch Bestrahlung mit VIS- oder UV-Licht aktivieren lässt..

Vorteilhafterweise wird in einem besonders bevorzugten Verfahren die neue HCl-Oxidation bei erhöhtem Druck, insbesondere bei einem Druck von bis zu 25 bar, bevorzugt bis 10 bar durchgeführt. Dies erhöht die Löslichkeit von Sauerstoff hin Lösung und wirkt sich somit positiv auf die Reaktionsgeschwindigkeit aus. Auch eine Ankopplung an nachfolgende Verfahrensschritte wird so erleichtert.

Eine bevorzugte Ausführung der Erfindung ist dadurch gekennzeichnet, dass Salzsäure in einer Konzentration von höchstens 12 Gew.-%, bevorzugt von höchstens 7 Gew.-%, besonders bevorzugt von mindestens 0,004 bis höchstens 6 Gew.-% eingesetzt wird.

In einer weiteren bevorzugten Variante des neuen Verfahrens wird die photokatalytische Reaktion bei erhöhter Temperatur, insbesondere bei maximal 80°C durchgeführt.

Besonders effektiv ist eine bevorzugte Ausführung des neuen Verfahrens, bei der der Feststoffkatalysator während der Reaktion in der Salzsäure suspendiert vorliegt und eine Korngröße im Bereich von 1 nm bis 3 cm bevorzugt von 1 nm bis 5 mm aufweist.

Die Bestimmung der Korngröße erfolgt wie üblich beispielsweise über Bildauswertung von Aufnahmen aus Elektronenmikroskopie (z.B. TEM, REM, STEM).

Besonders bevorzugt wird die Katalysatorsuspension während der neuen Reaktion gerührt.

In einer anderen bevorzugten Ausführung des neuen Verfahrens liegt der Feststoffkatalysator allein oder zusätzlich als Beschichtung auf einer strahlungsdurchlässigen Wand in der Reaktionszone vor und wird durch die Wand bestrahlt. Im Falle einer alleinigen Wandbeschichtung muss die abgereicherte Salzsäure nach der Reaktion nicht von suspendiertem Katalysator getrennt werden.

Hierbei trennt die strahlungsdurchlässige Wand den Strahlungserzeuger von der Salzsäure in der Reaktionszone. Besonders bevorzugte Beispiele für eine solche spezielle Verfahrensführung werden realisiert durch die Verwendung von Reaktoren mit mindestens teilweise strahlungsdurchlässiger Außenwand, wobei die Strahlungsquelle außerhalb des Reaktors angebracht ist. Dies kann unabhängig voneinander durch Reaktoren mit Prozessfenster oder Quarzglasreaktoren ausgeführt werden oder durch Reaktoren mit einer Strahlungsquelle, die in den Reaktor eintaucht, ausgeführt werden, wobei die Strahlungsquelle gleichfalls durch eine strahlungsdurchlässige Wand von der Reaktionsmischung getrennt ist. Weiter ist die Verwendung von LED-Strahlungskörpern mit strahlungsdurchlässiger Umhüllung bevorzugt, bei der die Energieversorgung der Strahlungskörper induktiv erfolgen kann. Auch hier kann der Photo-Katalysator in Suspension und/oder als Wandbeschichtung vorliegen. Als Strahlungsquelle für die im neuen Verfahren eingesetzte Strahlung wird bevorzugt eine UV-LED-Lampe verwendet.

Das neue Verfahren wird besonders bevorzugt so betrieben, dass die photokatalysierte Reaktion kontinuierlich durchgeführt wird. Beispielsweise erfolgt die Bestrahlung in einem Durchflussreaktor. Auch kann der benötigte Sauerstoff kontinuierlich der Reaktionszone zugeleitet werden.

In einer weiteren bevorzugten Variante des neuen Verfahrens wird das bei der Reaktion gebildete Chlor kontinuierlich mittels eines Transportgases aus der Reaktionszone entfernt und anschließend vom Transportgas getrennt. Als besonders bevorzugtes Transportgas wird Inertgas, besonders bevorzugt Stickstoff, oder eine Mischung von Sauerstoff mit Inertgas, insbesondere Stickstoff als Inertgas oder insbesondere Luft verwendet.

In einer weiteren bevorzugten Variante des neuen Verfahrens enthält die Salzsäure zusätzlich Alkalichloride, insbesondere NaCl bis zu einer Konzentration von 35,6 Gew.-%. In einer weiteren bevorzugten Ausführung des neuen Verfahrens enthält die Salzsäure bis zu 1 Gew.-% organische Verunreinigungen, insb. gesättigte und/oder ungesättigte, substituierte und/oder unsubstituierte Kohlenwasserstoffe, Alkohole, Ester, Ether, Carbonsäuren. Der Gehalt dieser Verunreinigungen wird durch Oxidation am Photokatalysator vermindert. Diese Art der Verminderung von Verunreinigungen ist aus dem Stand der Technik grundsätzlich bekannt.

Eine mögliche bevorzugte Ausführungsform ist eine Erweiterung des neuen Verfahrens, dadurch gekennzeichnet, dass die photokatalytische HCl-Oxidation mit einem oder mehreren anderen Typen von HCl-Oxidationsreaktionen ausgewählt aus der Reihe: katalytische Gasphasenoxidation, thermische Gasphasenoxidation und Elektrolyse von Salzsäure, kombiniert ist und als weitere Stufe, der einen oder mehreren anderen HCl-Oxidationsreaktionen nachgeordnet durchgeführt wird.

Besonders bevorzugt wird als andere HCl-Oxidationsreaktion die Elektrolyse von Salzsäure angewendet, zu der die neue photokatalytische HCl-Oxidation nachgeordnet durchgeführt wird.

Als besonders bevorzugt geeignete Ausführung der Elektrolyse von Salzsäure ist hier die Membranelektrolyse oder eine Verfahrensvariante der Membranelektrolyse, bei welcher eine Gasdiffusionselektrode als Kathode verwendet wird, zu nennen.

Geeignete bevorzugte Katalysatoren für das zuvor bezeichnete grundsätzlich bekannte Deacon-Verfahren, mit dem das neue photokatalytische Verfahren kombiniert werden kann, umfassen Rutheniumoxid, Rutheniumchlorid oder andere Rutheniumverbindungen auf Siliziumdioxid, Aluminiumoxid, Titandioxid, Zinndioxid oder Zirkondioxid als Träger und Ceroxid, Cerchlorid oder andere Cerverbindungen auf Siliziumdioxid, Aluminiumoxid, Titandioxid, Zinndioxid, Zirkondioxid als Träger. Geeignete Katalysatoren können beispielsweise durch Aufbringen von Rutheniumchlorid auf den Träger und anschließendes Trocknen oder Trocknen und Kalzinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die gegebenenfalls bevorzugt dem neuen Verfahren vorgeschaltete thermisch katalysierte Chlorwasserstoff-Oxidation kann adiabatisch oder bevorzugt isotherm oder annähernd isotherm, diskontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Die Kupfer- bzw. die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung der Katalysatoren eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls kalziniert werden. Bevorzugt werden die Formkörper zunächst bei 100 bis 150°C getrocknet und anschließend bei 200 bis 400°C kalziniert.

Das mit dem neuen Verfahren hergestellte Chlor wird in Produktionsverfahren zur Herstellung von Polymeren wie Polyurethanen, Polycarbonaten und PVC weiter verwendet, die als Nebenprodukt den Chlorwasserstoff liefern, der mit dem neuen photokatalytischen Oxidationsverfahren als Chlor in die jeweiligen Produktionsverfahren recycliert werden kann.

Die Erfindung wird nachfolgend durch die Beispiele, welche jedoch keine Beschränkung der Erfindung darstellen, näher erläutert.

### Beispiele

### Beispiel 1 (erfindungsgemäß)

In einem Suspensions-Reaktor mit einer 500 W Quecksilberdampf-Tauchlampe wurden 0,5 L einer 0,5 M Salzsäure und 300 mg Titandioxid (Hersteller: Sachtleben, Hombikat UV100; Primärpartikelgröße (Korngröße) <10nm) vorgelegt. Die Suspension wurde unter Rühren bei 10°C mit einem Gasgemisch aus 10 ml/min Sauerstoff und 40 ml/min Stickstoff gesättigt. Nach 30 min wurde die Tauchlampe eingeschaltet. Nach weiteren 30 min wurde Gasgemisch für 30 min zuerst durch die Suspension und dann durch einen Absorber mit 3 Gew.-%iger Kaliumiodid-Lösung geleitet. Dabei entstandenes Iod wurde mit einer Natriumthiosulfat-Maßlösung titriert. Es wurde eine maximale Cl₂-Evolationsrate von 156 µmol/h/g Katalysator gemessen.

### Beispiel 2 (erfindungsgemäß)

In einem Slurry-Reaktor mit einer 500 W Quecksilberdampf-Tauchlampe wurden 0,5 L einer 1 M Salzsäure und 300 mg Titandioxid (Hersteller: Sachtleben, Hombikat UV100) vorgelegt. Die Suspension wurde unter Rühren bei 10°C mit einem Gasgemisch aus 10 ml/min Sauerstoff und 40 ml/min Stickstoff gesättigt. Nach 30 min wurde die Tauchlampe eingeschaltet. Nach weiteren 30 min wurde das Gasgemisch für 30 min zuerst durch die Suspension und dann durch einen Absorber mit 3 Gew.-%iger Kaliumiodid-Lösung geleitet. Dabei entstandenes Iod wurde mit einer Natriumthiosulfat-Maßlösung titriert. Es wurde eine maximale Cl₂-Evolutionsrate von 145 µmol/h/g Katalysator gemessen.

### Beispiel 3 (Vergleich)

In einem Slurry-Reaktor mit einer 500 W Quecksilberdampf-Tauchlampe wurden 0,5 L einer 0,5 M Salzsäure und 300 mg Titandioxid (Hersteller: Sachtleben, Hombikat UV100) vorgelegt. Die Suspension wurde unter Rühren bei 10°C mit einem Gasgemisch aus 10 ml/min Sauerstoff und 40 ml/min Stickstoff gesättigt. Die Tauchlampe wurde nicht eingeschaltet. Nach 30 min wurde das Gasgemisch für 30 min zuerst durch die Suspension und dann durch einen Absorber mit 3 Gew.-%iger Kaliumiodid-Lösung geleitet. Es wurde keine Cl₂-Evolution gemessen.

### Beispiel 4 (Vergleich)

In einem Slurry-Reaktor mit einer 500 W Quecksilberdampf-Tauchlampe wurden 0,5 L einer 0,5 M Natriumchlorid-Lösung und 300 mg Titandioxid (Hersteller: Sachtleben, Hombikat UV100) vorgelegt. Die Suspension wurde unter Rühren bei 10°C mit einem Gasgemisch aus 10 ml/min Sauerstoff und 40 ml/min Stickstoff gesättigt. Nach 30 min wurde die Tauchlampe eingeschaltet. Nach weiteren 30 min wurde das Gasgemisch für 30 min zuerst durch die Suspension und dann durch einen Absorber mit 3 Gew.-%iger Kaliumiodid-Lösung geleitet. Es wurde keine Cl₂-Evolution gemessen.

### Beispiel 5 (Vergleich)

In einem Slurry-Reaktor mit einer 500 W Quecksilberdampf-Tauchlampe wurden 0,5 L einer 0,5 M Salzsäure und 300 mg Titandioxid (Hersteller: Sachtleben, Hombikat UV100) vorgelegt. Die Suspension wurde unter Rühren bei 10°C mit 50 ml/min Stickstoff gesättigt. Nach 60 min wurde die Tauchlampe eingeschaltet. Nach weiteren 30 min wurde das Gasgemisch für 30 min zuerst durch die Suspension und dann durch einen Absorber mit 3 Gew.-%iger Kaliumiodid-Lösung geleitet. Es wurde keine Cl₂-Evolution gemessen.

### Beispiel 6 (erfindungsgemäß)

In einem Slurry-Reaktor mit einer 500 W Quecksilberdampf-Tauchlampe wurden 0,5 L einer 0,5 M NaCl-Lösung in 0,01 M HCl und 300 mg Titandioxid (Hersteller: Sachtleben, Hombikat UV100) vorgelegt. Die Suspension wurde unter Rühren bei 10°C mit einem Gasgemisch aus 10 ml/min Sauerstoff und 40 ml/min Stickstoff gesättigt. Nach 30 min wurde die Tauchlampe eingeschaltet. Nach weiteren 30 min wurde das Gasgemisch für 30 min zuerst durch die Suspension und dann durch einen Absorber mit 3%iger Kaliumiodid-Lösung geleitet. Es wurde eine maximale Cl₂-Evolationsrate von 45,2 µmol/h/g Katalysator gemessen.

Die oben angeführten Beispiele zeigen, dass nur unter Verwendung eines Photokatalysators und gleichzeitiger Anwesenheit von Sauerstoff eine wässrige HCl-Lösung aufbereitet werden kann. Die HCl wird dabei photokatalytisch unter Sauerstoffverbrauch zu Chlor oxidiert. Als Koppelprodukt wird hierbei Wasser freigesetzt. Die Reaktion erweist sich als weitestgehend konzentrationsunabhängig und eignet sich somit ideal um die beschriebene spezielle Aufgabe, das Recycling einer verdünnten HCl-Lösung als Nebenprodukt aus einem anderen chemischen Prozess, zu lösen. Darüber hinaus konnte gezeigt werden, dass die alleinige Anwesenheit von ChloridIonen, Sauerstoff und Photokatalysator in Lösung (siehe Beispiel 4) nicht ausreicht um eine messbare Chlorbildung herbeizuführen. Mit Bezug auf den Stand der Technik im Bereich der katalytischen Gasphasenoxidation von HCl (Deacon Verfahren) sowie generelle Erkenntnisse aus der HCl- und NaCl-Elektrolyse ist diese Beobachtung äußerst unerwartet. Obgleich eine Variante des thermischen Deacon Verfahrens mit NaCl als Chlor-Quelle aufgrund des hohen NaCl Siedepunktes von über 1400°C praktisch ausgeschlossen werden kann, wird die elektrolytische Aufbereitung von NaCl in Form der Chlor-Alkali-Elektrolyse technisch in großem Maße eingesetzt. Bei der vorliegenden Erfindung scheint jedoch genau das Zusammenspiel zwischen HCl, Sauerstoff und dem Photokatalysator den gewünschten Effekt, die Chlorbildung, in überraschender Weise zu ermöglichen.

## Patentansprüche

1. Photokatalytisches Verfahren zur Herstellung von Chlor aus wässriger Salzsäure durch Reaktion der Salzsäure mit Sauerstoff enthaltendem Gas in Gegenwart von photoaktivem Feststoffkatalysator in einer Reaktionszone, **dadurch gekennzeichnet, dass** die Reaktion unter Einstrahlen von Strahlung einer Wellenlänge im Bereich von 280 nm bis 800 nm durchgeführt wird.

2. Verfahren gemäß Anspruch 1, **dadurch gekennzeichnet, dass** der Katalysator mindestens ein photoaktives Material, insbesondere ein gegenüber Salzsäure und Sauerstoff beständiges photoaktives Material aufweist.

3. Verfahren gemäß Anspruch 1 oder 2, **dadurch gekennzeichnet, dass** der Feststoffkatalysator mindestens ein Oxid, Oxidchlorid, Mischoxid oder Mischoxidchlorid der Metalle: Titan, Cer, Zinn, Tantal gegebenenfalls als Mischoxide dieser Metalle mit Alkalimetallen oder Erdalkalimetallen, insbesondere Ca, Sr, Ba, Na oder K ist und besonders bevorzugt ausgewählt ist aus einem oder mehreren der Reihe: TiO₂, CeO₂, SnO₂, Strontiumtantalate SrₓTa_{y}O_{z}, Strontiumtitanate, insbesondere SrT₁O₃, Ceroxidchlorid und Titanoxidchlorid.

4. Verfahren gemäß einem der Ansprüche 1 bis 3, **dadurch gekennzeichnet, dass** der Feststoffkatalysator zusätzlich mindestens einen Co-Katalysator als zusätzliche katalytische Aktivkomponente (Co-Katalysator) mindestens eine Verbindung aus der Reihe: CuCl₂, FeCl₃, Cr₂O₃, Chromoxidchlorid, RuO₂, Rutheniumoxidchlorid und RuCl₂ aufweist und für den Fall, dass das photoaktive Material nicht CeO₂ und/oder Ceroxidchlorid ist CeO₂ und Ceroxidchlorid.

5. Verfahren gemäß einem der Ansprüche 1 bis 4, **dadurch gekennzeichnet, dass** Salzsäure in einer Konzentration von höchstens 12 Gew.-%, bevorzugt von höchstens 7 Gew.-%, besonders bevorzugt von mindestens 0,004 bis höchstens 6 Gew.-% eingesetzt wird.

6. Verfahren gemäß einem der Ansprüche 1 bis 5, **dadurch gekennzeichnet, dass** der Feststoffkatalysator während der Reaktion in der Salzsäure suspendiert vorliegt und eine Korngröße im Bereich von 1 nm bis 3 cm bevorzugt von 1 nm bis 5 mm aufweist.

7. Verfahren gemäß Anspruch 6, **dadurch gekennzeichnet, dass** die Katalysatorsuspension während der Reaktion gerührt wird.

8. Verfahren gemäß einem der Ansprüche 1 bis 7, **dadurch gekennzeichnet, dass** die Reaktion bei erhöhtem Druck, insbesondere bei einem Druck von bis zu 25 bar, bevorzugt bis 10 bar durchgeführt wird.

9. Verfahren gemäß einem der Ansprüche 1 bis 8, **dadurch gekennzeichnet, dass** die Reaktion bei erhöhter Temperatur, insbesondere bei maximal 80°C durchgeführt wird.

10. Verfahren gemäß einem der Ansprüche 1 bis 9, **dadurch gekennzeichnet, dass** der Feststoffkatalysator als Beschichtung auf einer strahlungsdurchlässigen Wand in der Reaktionszone vorliegt und durch die Wand bestrahlt wird.

11. Verfahren nach einem der Ansprüche 1 bis 10, **dadurch gekennzeichnet, dass** die Strahlung für die photokatalysierte Reaktion einen Energiebereich von 3,2 bis 4 eV, bevorzugt von 3,26 bis 3,94 eV, umfasst.

12. Verfahren nach einem der Ansprüche 1 bis 11, **dadurch gekennzeichnet, dass** als Strahlungsquelle für die Strahlung bei der Reaktion eine UV-LED-Lampe verwendet wird.

13. Verfahren gemäß einem der Ansprüche 1 bis 12, **dadurch gekennzeichnet, dass** die photokatalysierte Reaktion kontinuierlich durchgeführt wird.

14. Verfahren gemäß einem der Ansprüche 1 bis 13, **dadurch gekennzeichnet, dass** das bei der Reaktion gebildete Chlor kontinuierlich mittels eines Transportgases aus der Reaktionszone entfernt und anschließend vom Transportgas getrennt wird.

15. Verfahren nach einem der Ansprüche 1 bis 14, **dadurch gekennzeichnet, dass** die photokatalytische HCl-Oxidation mit einer oder mehreren anderen Typen von HCl-Oxidationsreaktionen ausgewählt aus der Reihe: katalytische Gasphasenoxidation, thermische Gasphasenoxidation und Elektrolyse von HCl Gas, kombiniert und als weitere Stufe der einen oder mehreren anderen HCl-Oxidationsreaktionen nachgeordnet durchgeführt wird.

16. Verfahren nach Anspruch 15, **dadurch gekennzeichnet, dass** als andere HCl-Oxidationsreaktion die Elektrolyse von Salzsäure ausgewählt ist, zu der die neue photokatalytische HCl-Oxidation nachgeordnet durchgeführt wird.

17. Verfahren nach einem der Ansprüche 1 bis 16, **dadurch gekennzeichnet, dass** die Salzsäure zusätzlich Alkalichloride enthält, insbesondere NaCl bis zu einer Konzentration von 35,6 Gew.-%.
